# DEMANDE DE BREVET EUROPEEN

(11) **EP 2 538 174 A1**
(43) Date de publication de la demande: **26.12.2012**
(21) Numéro de dépôt: 12173026.1
(22) Date de dépôt: 21.06.2012
(51) Int. Cl.: G01C 9/06, G01C 9/24, G01C 9/26

(54) **Dispositif de mesure d'inclinaison comportant une ampoule renfermant une bulle et des moyens capacitifs de détection de la position de la bulle dans l'ampoule**

(30) Priorité: 23.06.2011 FR 1155543
(71) Demandeur: Agatec, 78600 Le Mesnil Le Roi (FR)
(72) Inventeur: Chiorean, Mircea, 78600 LE MESNIL LE ROI (FR); Franclet, Roland, 95490 VAUREAL (FR); Pays, Mickael, 78260 ACHERES (FR); Persin, Didier, 78400 CHATOU (FR); Daret, Dominique, 92130 ISSY LES MOULINEAUX (FR)
(74) Mandataire: Beaudouin-Lafon, Emmanuel

(57) **Abrégé**

L'invention concerne un dispositif comportant une carte de circuit imprimé (2) ainsi qu'une ampoule oblongue (12) renfermant un liquide et une bulle (13), ce circuit imprimé comportant une première plage métallique (8) et une seconde plage métallique (9) situées au niveau de deux régions distinctes de l'ampoule oblongue (12) le long de cette ampoule, et des moyens électroniques (3) reliés aux deux plages métalliques (8, 9) et à un élément métallique (14) de référence du dispositif pour déterminer d'une part la capacité électrique entre la première plage métallique (8) et l'élément métallique de référence (14), et d'autre part la capacité électrique entre la seconde plage métallique (9) et l'élément métallique de référence (14).

L'invention peut s'appliquer notamment à un niveau à laser pourvu de moyens pour qu'il se configure automatiquement à l'horizontale.

## Description

L'invention concerne un appareil de type niveau électronique, c'est-à-dire permettant de fournir une information d'horizontalité.

### ARRIERE PLAN DE L'INVENTION

Un tel appareil est typiquement un niveau à rayon laser, utilisé notamment dans le domaine de la construction de bâtiment. Il comprend un boîtier dans lequel est monté un corps ayant une tête dépassant de la face supérieure du boîtier pour émettre un rayon laser horizontal.

L'ensemble intègre des moyens motorisés pour ajuster l'orientation du corps par rapport au boîtier, le corps étant équipé de moyens permettant de déterminer de manière précise s'il est horizontal ou non.

En pratique, l'appareil est installé à un premier emplacement, à une hauteur prédéterminée, en étant par exemple fixé à un mur ou bien installé sur un trépied posé sur le sol. Lorsque l'appareil est mis en service, une première procédure est d'abord enclenchée pour orienter son corps horizontalement grâce aux moyens motorisés.

Lorsque le corps est horizontal, sa tête émet alors un rayon laser qui est de fait lui-même horizontal. Ce rayon laser se projette alors par exemple sur un autre mur du bâtiment en construction, ce qui permet de connaître la hauteur prédéterminée à un second emplacement.

Avantageusement, l'appareil intègre un dispositif optique grâce auquel le rayon laser horizontal qu'il génère au niveau de sa tête tourne autour d'un axe vertical. Lorsque l'ensemble est installé à l'intérieur d'une pièce en construction, il projette une ligne horizontale située à une hauteur prédéterminée sur les différents murs de cette pièce.

Les moyens de détection de l'horizontalité, comprennent une ampoule renfermant un liquide et une bulle, et la position de la bulle le long de l'ampoule est lue par des moyens électroniques pour en déduire si l'appareil est horizontal ou non.

A cet effet, l'ampoule comporte à sa face externe deux portions métallisées espacées l'une de l'autre selon la direction longitudinale de l'ampoule, et reliées à un circuit électronique de l'appareil. Ce circuit électronique est agencé pour établir une évaluation de capacité électrique pour chaque portion métallisée, c'est-à-dire une évaluation de la permittivité diélectrique de l'environnement de chaque portion métallisée.

Comme on le comprend, la première et la seconde portion métallisée ont les mêmes dimensions et sont régulièrement réparties le long de l'ampoule, de sorte que la bulle est au centre de l'ampoule si les deux capacités mesurées sont identiques.

Lorsque la bulle est située à une extrémité de l'ampoule, par exemple en vis-à-vis de la première portion métallisée, les deux capacités mesurées sont différentes, de sorte que le dispositif n'est pas horizontal.

### OBJET DE L'INVENTION

Le but de l'invention est de proposer une solution pour réduire le coût de fabrication des moyens de mesure de l'horizontalité d'un tel appareil.

### RESUME DE L'INVENTION

A cet effet, l'invention a pour objet un dispositif comportant une carte de circuit imprimé ainsi qu'une ampoule renfermant un liquide et une bulle, ce circuit imprimé comportant au moins une première plage métallique et une seconde plage métallique situées en vis-à-vis de deux régions distinctes de l'ampoule, et des moyens électroniques reliés aux deux plages métalliques pour déterminer une capacité électrique associée à la première plage métallique, et une capacité électrique associée à la seconde plage métallique, ces capacités électriques dépendant de la position de la bulle dans l'ampoule.

Avec cette solution, le montage de l'ampoule dans le dispositif est simplifié par le fait qu'il ne requiert pas la réalisation de connexions électriques reliant l'ampoule au circuit imprimé.

L'invention concerne également un tel dispositif, dans lequel l'ampoule est portée par la carte de circuit imprimé.

L'invention concerne également un tel dispositif, dans lequel l'ampoule est fixée à la carte de circuit imprimé par collage.

L'invention concerne également un tel dispositif, comprenant une première paire de plages métalliques distinctes situées en vis-à-vis d'une première ampoule oblongue en étant espacées l'une de l'autre le long de cette ampoule, et une seconde paire de plages métalliques situées en vis-à-vis d'une seconde ampoule oblongue en étant espacées l'une de l'autre le long de cette ampoule, la première ampoule et la seconde ampoule étant orientées perpendiculairement l'une à l'autre.

L'invention concerne également un tel dispositif, dans lequel les plages métalliques et chaque ampoule sont situées au niveau d'une face inférieure de la carte de circuit imprimé.

L'invention concerne également un tel dispositif, dans lequel le circuit imprimé comporte une ampoule renfermant une bulle mobile selon deux axes dans cette ampoule, et quatre plages métalliques distinctes situées en vis-à-vis de cette ampoule, ainsi que des moyens pour déterminer les capacités électriques associées à chaque plage, ces quatre capacités dépendant de la position de la bulle dans l'ampoule.

### BREVE DESCRIPTION DES FIGURES

La figure 1 est une représentation montrant schématiquement les éléments constitutifs de l'invention ;
La figure 2 est un schéma représentant le fonctionnement d'une partie du circuit utilisé pour évaluer une capacité associée à une plaque conductrice unique.

### DESCRIPTION DETAILLEE DE L'INVENTION

L'idée à la base de l'invention est de dissocier l'ampoule renfermant le liquide et la bulle, et les portions ou plages métalliques servant à déterminer la position de la bulle le long de l'ampoule, par mesure capacitive. Dans ces conditions, il n'est plus nécessaire de connecter électriquement les zones métallisées de l'ampoule au circuit électronique, ce qui permet de se dispenser des opérations de soudage correspondantes.

L'appareil selon l'invention se présente par exemple sous forme d'un niveau laser automatique. Il comporte alors un boîtier renfermant un corps principal ayant une tête dépassant de la face supérieure de ce boîtier pour émettre un rayon laser horizontal tournant autour d'un axe vertical, à une fréquence de rotation relativement élevée. L'ensemble est pourvu de moyens motorisés d'ajustement de l'orientation du corps principal par rapport au boîtier, pour placer automatiquement ce corps horizontalement lorsqu'une initialisation est déclenchée, par exemple par appui sur un bouton de mise en service de l'appareil.

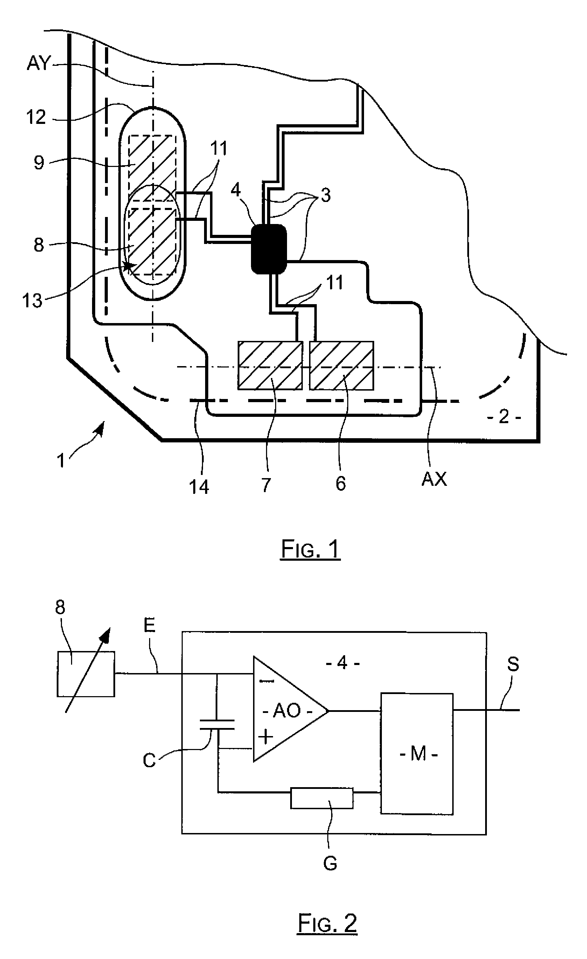

La figure 1 montre une partie d'un circuit imprimé 1 qui est porté par le corps principal, et qui comporte les moyens de détermination de l'horizontalité de l'appareil, autour de deux axes inscrits dans le plan de ce circuit imprimé.

Ce circuit imprimé 1 comporte une carte 2 comprenant des pistes électriquement conductrices 3, telles que des pistes en cuivre, cette carte portant différents composants électroniques, tels que le composant repéré par 4, qui sont soudés à ces pistes pour être électriquement reliés les uns aux autres.

Comme visible dans la figure 1, cette carte 2 comporte encore quatre plages métalliques, ici en cuivre tout comme les pistes. Ces plages qui sont repérées par 6, 7, 8 et 9, sont reliées au composant électronique 4 par quatre pistes correspondantes repérées par 11.

Les plages 6 et 7 sont rectangulaires, elles sont situées à proximité l'une de l'autre en s'étendant l'une dans le prolongement de l'autre, selon un axe repéré par AX, et elles sont électriquement isolées l'une de l'autre.

Les plages 8 et 9 sont identiques, et disposées de la même façon que les plages 6 et 7, mais elles s'étendent dans le prolongement l'une de l'autre selon un axe AY qui est perpendiculaire à l'axe AX, les axes AX et AY étant par ailleurs tous deux parallèles à la carte 2.

Une ampoule 12 renfermant un liquide et une bulle 13 est portée par la carte 2 de circuit imprimé en étant collée à cette carte, sur les plages 8 et 9. Cette ampoule qui est généralement oblongue, a une forme de révolution autour de l'axe AY, et elle s'étend longitudinalement selon cet axe.

Elle couvre les deux plages 8 et 9, ces deux plages délimitant conjointement un contour dont la longueur le long de l'axe AY est légèrement inférieure à la longueur de l'ampoule, et dont la largeur est aussi légèrement inférieure au diamètre de l'ampoule. Comme visible dans la figure 1, la plage 8 est située en vis-à-vis d'une moitié de l'ampoule où se trouve la bulle 13, et la plage 9 se trouve en vis-à-vis de l'autre moitié d'ampoule qui comporte principalement du liquide.

Complémentairement, le corps principal comporte un élément métallique de qui s'étend avantageusement au dessus des ampoules. Cet élément métallique qui est représenté en pointillés en étant repéré par 14 dans la figure 1 n'est pas indispensable, et peut être par exemple une plaque métallique s'étendant parallèlement à la carte de circuit imprimé 2.

La fixation de l'ampoule 12 à la carte 2 peut être assurée simplement par collage, en s'assurant autant que faire se peut que cette ampoule recouvre les deux plages 8 et 9.

Comme visible dans la figure, la position de la bulle 13 le long de l'ampoule 12 est ainsi conditionnée par l'orientation de la carte 2 qui la porte, par rapport à l'horizontale et autour de l'axe AX.

De manière analogue, une autre ampoule, non représentée dans la figure, est fixée à la carte 2, par exemple par collage, de manière à recouvrir les plages électriques 6 et 7, cette autre ampoule étant ainsi montée de manière analogue, mais en s'étendant selon l'axe AX.

Ainsi, la position de la bulle dans l'ampoule non représentée sur la figure, est conditionnée par l'inclinaison de la carte 2 par rapport à l'horizontale autour de l'axe AY.

La détermination de la position de la bulle 13 le long de l'ampoule 12 est assurée en évaluant la capacité associée à la plage 8 et la capacité associée à la plage 9. Comme on l'a compris, les capacités associées à ces deux éléments diffèrent tant que la bulle n'est pas au centre de l'ampoule, c'est-à-dire tant que la carte 2 n'est pas horizontale.

En pratique, dans la configuration de la figure 1 où la bulle 13 est située en vis-à-vis de la plage 8, la capacité associée à la plage 8 est supérieure à la capacité associée à la plage 9. Autrement dit, la permittivité diélectrique de l'environnement de la plage 8 diffère de la permittivité diélectrique de l'environnement de la plage 9 tant que la bulle n'est pas située au centre de l'ampoule.

La détermination de la position de la bulle située dans l'ampoule non représentée qui recouvre les plages 6 et 7 est réalisée de manière analogue, par mesure de capacités réalisée avec les moyens électroniques portés par la carte de circuit imprimé 2.

Le composant 4 du circuit imprimé 2, qui est utilisé pour évaluer les capacités associées aux plages métalliques, est représenté schématiquement de façon partielle à la figure 2. D'une manière générale, un tel composant est connu en soi notamment dans le domaine des écrans tactiles et/ou claviers, le composant utilisé pouvant être par exemple celui qui est commercialisé par Analog Devices sous la référence AD7147.

Ce composant comprend un amplificateur opérationnel AO, dont l'entrée négative est reliée électriquement, par l'intermédiaire d'une entrée E du composant, à une plage métallique telle que la plage 8, et dont l'entrée positive est reliée à l'entrée négative par l'intermédiaire d'un condensateur repéré par C et ayant une capacité connue.

Il comprend encore un organe de mesure, repéré par M, connecté à la sortie de l'amplificateur AO, et fournissant sur une sortie S du composant, une valeur représentative de la mesure ou évaluation de la permittivité diélectrique de l'environnement de la plage 8. Il comprend encore un oscillateur G qui est relié d'une part à l'entrée positive de l'amplificateur AO, et d'autre part à l'organe de mesure M.

Concrètement, la valeur fournie en sortie de l'amplificateur AO, et transcrite sur la sortie S est représentative de la permittivité diélectrique de l'environnement de la plaque 8, et cette valeur dépend de la position de la bulle dans son ampoule.

Comme on le comprend, un même composant 4 comporte non pas une seule entrée E et une seule sortie S, mais il comporte au contraire plusieurs entrées E reliées chacune à une zone métallisée, et plusieurs sorties S représentatives chacune d'une zone métallisée correspondante.

Pour accroître le gain de la mesure fournie par le composant 2, sur ses sorties, l'environnement des plages métalliques est avantageusement entouré par un élément métallique à potentiel électrique fixe, tel que l'élément métallique 14 qui peut avantageusement être constitué par une portion du châssis métallique du corps principal portant le circuit imprimé 2.

Pour améliorer la précision dans la détermination de la position de la bulle le long de l'ampoule, il est avantageux que les plages 6 à 9 et les ampoules soient situées à la face inférieure du circuit imprimé lorsque l'appareil est en service, ce qui permet de réduire la distance entre la bulle et la carte de circuit imprimé afin d'augmenter la sensibilité du dispositif.

Dans l'exemple des figures, le dispositif comporte deux ampoules oblongues orientées perpendiculairement l'une à l'autre en étant chacune associée à deux plages métalliques. Mais il est également possible de prévoir une ampoule unique ayant en vue de dessus une forme générale de révolution, et non pas oblongue, et dans laquelle la bulle est mobile selon deux axes.

Dans ce cas, le circuit électronique comporte quatre plages métalliques situées au droit de l'ampoule, selon une disposition correspondant aux quatre sommets d'un carré. La détermination des capacités électriques associées à chaque plage métallique, permet ainsi de connaître la position de la bulle selon deux axes perpendiculaires correspondant chacun à une paire de plages métalliques.

## Revendications

1. Dispositif comportant une carte de circuit imprimé (2) ainsi qu'une ampoule (12) renfermant un liquide et une bulle (13), ce circuit imprimé comportant au moins une première plage métallique (8) et une seconde plage métallique (9) situées en vis-à-vis de deux régions distinctes de l'ampoule (12), et des moyens électroniques (3) reliés aux deux plages métalliques (8, 9) pour déterminer une capacité électrique associée à la première plage métallique (8), et une capacité électrique associée à la seconde plage métallique (9), ces capacités électriques dépendant de la position de la bulle (13) dans l'ampoule (12).

2. Dispositif selon la revendication 1, dans lequel l'ampoule (12) est portée par la carte de circuit imprimé (2).

3. Dispositif selon la revendication 2, dans lequel l'ampoule (12) est fixée à la carte de circuit imprimé (2) par collage.

4. Dispositif selon l'une des revendications précédentes, comprenant une première paire de plages métalliques distinctes (6, 7) situées en vis-à-vis d'une première ampoule oblongue en étant espacées l'une de l'autre le long de cette ampoule, et une seconde paire de plages métalliques (8, 9) situées en vis-à-vis d'une seconde ampoule oblongue (12) en étant espacées l'une de l'autre le long de cette ampoule, la première ampoule et la seconde ampoule (12) étant orientées perpendiculairement l'une à l'autre.

5. Dispositif selon l'une des revendications précédentes, dans lequel les plages métalliques (6-8) et chaque ampoule (12) sont situées au niveau d'une face inférieure de la carte de circuit imprimé (2).

6. Dispositif selon la revendication 1, dans lequel le circuit imprimé comporte une ampoule renfermant une bulle mobile selon deux axes dans cette ampoule, et quatre plages métalliques distinctes situées en vis-à-vis de cette ampoule, ainsi que des moyens pour déterminer les capacités électriques associées à chaque plage, ces quatre capacités dépendant de la position de la bulle dans l'ampoule.
